# EUROPÄISCHE PATENTANMELDUNG

(11) **EP 0 947 178 A1**
(43) Veröffentlichungstag der Anmeldung: **06.10.1999**
(21) Anmeldenummer: 98106217.7
(22) Anmeldetag: 06.04.1998
(51) Int. Cl.: A61C 11/00

(54) **Artikulator**

(71) Anmelder: MIKRONA TECHNOLOGIE AG, 8957 Spreitenbach (CH)
(72) Erfinder: Nowak, Claude, 5430 Wettingen (CH)
(74) Vertreter: Wagner, Wolfgang, Dr. Phil., Dipl.-Phys.

(57) **Zusammenfassung**

Ein erster Träger (1) und ein zweiter Träger (4) für ein Unterkiefer- bzw. Oberkieferteilmodell sind über ein Gelenkstück (7) verbunden. Er umfasst eine Hülse (8), die am ersten Träger (1) um eine Kippachse (9) aus einer Schliessstellung nach hinten kippbar gelagert ist sowie einen Dorn (12), der in der Hülse (8) verschieblich, aber durch einen zugleich eine Drehsicherung bildenden Fixierbolzen (19) fixierbar gelagert ist, welcher den zweiten Träger (4) trägt. Dieser ist um den Dorn (12), der eine zur Kippachse (9) normale Drehachse (14) definiert, drehbar. Der Dorn (12) weist seitlich Führungsstifte (17a,b) auf, welche in einer Nullage, in welcher der erste Träger (1) und der zweite Träger (4) übereinander liegen, in Einbuchtungen (18a,b) einer im übrigen den Dorn (12) auf konstanter Höhe umgebenden Gleitfläche (16) am zweiten Träger (4) liegen, die durch eine am Dorn (12) abgestützte Druckfeder (15) gegen die Führungsstifte (17a,b) gedrückt wird. Bei Drehung des zweiten Trägers (4) aus der Nullage bewirkt der Kontakt der Gleitfläche (16) mit den Führungsstiften (17a,b) daher eine leichte Anhebung des zweiten Trägers (4).

## Beschreibung

Die Erfindung betrifft einen Artikulator gemäss dem Oberbegriff des Anspruchs 1. Derartige Artikulatoren werden in der Dentaltechnik zur Herstellung von Kiefermodellen für die Fertigung von Zahnersatz wie Kronen und Brücken verwendet.

Dabei werden ausgehend von einem im Mund des Patienten genommenen Abdruck Modelle, z. B. aus Gips, direkt im Artikulator hergestellt, indem die beiden Träger des Artikulators mit Gips gefüllt und der Artikulator mit zwischen den Trägern angeordnetem Abdruck geschlossen wird. Nach Aushärten, Oeffnen des Artikulators und Entfernen des Abdrucks trägt dann der eine Träger des Artikulators ein Modell des Oberkiefers oder eines Teils desselben und der andere Träger ein Modell des Unterkiefers oder eines entsprechenden Teils davon. Da die Träger entsprechend drehbar miteinander verbunden sind, können die einander gegenüberliegenden Kieferteilen entsprechenden Modelle in Schliessstellung gebracht und die Korrektheit derselben überprüft werden, während manuelle Bearbeitung der Modelle bei geöffnetem Artikulator durchgeführt wird. Gewöhnlich werden auf diese Weise nur Modelle von kleineren Teilen des Ober- oder Unterkiefers hergestellt. Die entsprechenden Artikulatoren werden dementsprechend oft als Teilartikulatoren bezeichnet.

Aus der DE-A-44 39 129 ist ein gattungsgemässer Artikulator bekannt, bei welchem die beiden Träger über ein Scharniergelenk verbunden sind, welches nur Drehung um eine feste Achse zulässt. Die Bewegungsmöglichkeiten des Kiefergelenks sind jedoch wesentlich vielfältiger. Von besonderer Bedeutung ist eine beim Kauvorgang oft vorkommende seitliche Verschiebung des Unterkiefers gegenüber dem Oberkiefer aus der Schliesslage, die mit einer leichten Oeffnung der Kiefer verbunden ist. Seitliche Verschiebungen können mit dem bekannten Artikulator, mit dem nur eine einfache Oeffnungs- und Schliessbewegung ausführbar ist, nicht überprüft werden.

Der Erfindung liegt die Aufgabe zugrunde, einen Artikulator anzugeben, der eine seitliche Verschiebung der Kiefermodelle oder -teilmodelle Träger gegeneinander erlaubt. Diese Aufgabe wird durch die Merkmale im kennzeichnenden Teil des Anspruchs 1 gelöst.

Die durch die Erfindung erzielten Vorteile liegen vor allem darin, dass es mit dem erfindungsgemässen Artikulator möglich ist, auch eine seitliche Verschiebung der Träger gegeneinander, insbesondere verbunden mit einer leichten Oeffnung derselben, nachzubilden und zu überprüfen, ob die Kiefermodelle oder -teilmodelle einen glatten, ungestörten Ablauf dieser wichtigen Bewegung zulassen. Zugleich ist der erfindungsgemässe Artikulator verhältnismässig einfach und robust im Aufbau und daher einfach zu bedienen und nicht übermässig teuer in der Herstellung.

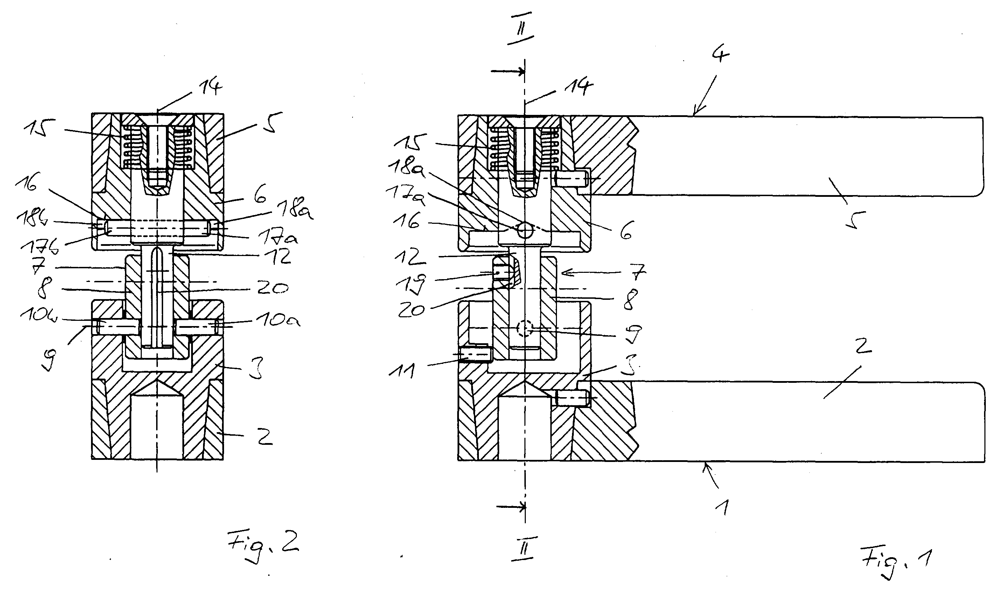

Im folgenden wird die Erfindung anhand von Figuren, welche lediglich ein Ausführungsbeispiel darstellen, näher erläutert. Es zeigen
- Fig. 1: einen Längsschnitt durch einen erfindungsgemässen Artikulator und
- Fig. 2: einen Querschnitt längs II-II in Fig. 1.

Der erfindungsgemässe Artikulator gemäss Ausführungsbeispiel weist einen ersten Träger 1 mit einer Schale 2 zur Aufnahme eines Unterkieferteilmodells und einem mit dem hinteren Ende derselben verbundenen Verbindungsstück 3 auf, das mit einem konischen Zapfen in einer entsprechenden Ausnehmung in der Schale 2 sitzt und durch einen in eine Ausnehmung in derselben eingreifenden Sicherungsbolzen gegen Verdrehung gesichert ist, und einen zweiten Träger 4 mit einer der Schale 2 des ersten Trägers 1 vollständig entsprechenden Schale 5 zur Aufnahme eines entsprechenden Oberkieferteilmodells, welche in gleicher Weise fest mit einem Verbindungsstück 6 verbunden ist. Die beiden Verbindungsstücke 3, 6 sind durch ein Gelenkstück 7 verbunden, das ein als Hülse 8 ausgebildetes erstes Teil umfasst, welches im ersten Verbindungsstück 3 um eine horizontale, zur Längsrichtung des Trägers 1 normale Kippachse 9 kippbar ist. Die Kippachse 9 wird durch zwei in einer Linie angeordnete, im Verbindungsstück 3 verankerte Bolzen 10a,b hergestellt, welche beidseits in die Hülse 8 durchdringende Bohrungen ragen. Das Gelenkstück 7 mit dem zweiten Träger 4 kann aus der dargestellten Grundstellung zum Oeffnen der Kieferteilmodelle um die Kippachse 9 nach hinten gekippt werden. Die Schliessstellung des zweiten Trägers 4 ist durch einen Einstellbolzen 11 festgelegt, einen Gewindebolzen, der unterhalb der Kippachse 9 in einer Gewindebohrung in der Rückwand des Verbindungsteils 6 verstellbar gelagert ist und an dessen Ende die Rückseite der Hülse 8 in der Grundstellung anliegt.

In der Hülse 8 ist ein Dorn 12 mit einem unteren Abschnitt kleineren Durchmessers verschieblich gelagert, dessen oberer Abschnitt durch eine durchgehende Bohrung 13 im Verbindungsteil 6 des zweiten Trägers 4 geführt ist. Das Verbindungsteil 6 ist um eine Drehachse 14, die mit der Achse des Dorns 12 zusammenfällt, drehbar. Der Dorn 12 trägt an seinem oberen Ende eine Abstützplatte, an deren Unterseite eine als Spiralfeder ausgebildete Druckfeder 15 abgestützt ist, welche gegen einen nach oben weisenden umlaufenden Anschlag des Verbindungsteils 6 drückt und dasselbe mit einer nach unten, gegen die Kippachse 9 gerichteten Kraft beaufschlagt. Diese Kraft drückt eine nach unten weisenden Gleitfläche 16 gegen die beiden vorragenden, Führungsstifte 17a,b bildenden Endstücke eines horizontal und normal zur Längsrichtung des ersten Trägers 1 den oberen Abschnitt des Dorns 12 durchdringenden Stiftes.

Die Gleitfläche 16 weist beidseits zwei einander gegenüberliegende gleiche Einbuchtungen 18a,b auf, in welchen die Führungsstifte 17a,b in einer in den Figuren dargestellten Nullage des zweiten Trägers 4, in welcher derselbe genau über dem ersten Träger 1 angeordnet ist, liegen. Die Einbuchtungen sind symmetrisch und von etwa dreieckiger Form und erstrecken sich über ein verhältnismässig kleines Winkelintervall. Im übrigen ist die Gleitfläche 16 eben und umgibt den Dorn 13 auf konstanter Höhe, d. h. mit konstantem Abstand von der Kippachse 9. Die Gleitfläche 16 bildet eine Kulisse, welche an den Führungsstiften 17a,b bei Drehung des zweiten Trägers 4 um die Drehachse 14 entlanggleitet. Sie bestimmt so dessen Höhenlage in Abhängigkeit von seiner Winkellage.

Auf der Rückseite der Hülse 8 ist in einer durchgehenden Gewindebohrung ein Fixierbolzen 19 angebracht, welcher in eine Längsrille 20 an der Rückseite des Dorns 12 ragt und eine Drehsicherung desselben gegenüber der Hülse 8 bildet. Bei gelöstem Fixierbolzen 19 ist der Dorn 12 gegenüber der Hülse 8 jedoch längsverschieblich, so dass der Abstand des zweiten Trägers 4 von der Kippachse 9 veränderlich ist. Durch Anziehen des Fixierbolzens 19 wird der Dorn 12 gegen Verschiebung in der Hülse 8 fixiert.

Zur Bearbeitung eines der beiden Kieferteilmodelle kann der zweite Träger 4 durch Kippen des Gelenkstücks 7 um die Kippachse 9 aus der Schliessstellung nach hinten und anschliessendes Verddrehen des zweiten Trägers 4 um einen beliebigen Winkel vom ersten Träger 1 entfernt werden, so dass eine ungestörte Bearbeitung jedes der Kieferteilmodelle möglich ist. Natürlich kann zur Bearbeitung des Oberkieferteilmodells der Artikulator auch auf den zweiten Träger 4 abgestellt werden. Ausserdem können der erste Träger 1 und der zweite Träger 4 nach Lösen des Fixierbolzens 19 durch Herausziehen des Dorns 12 aus der Hülse 8 auch vollständig getrennt werden. Auch können die Schalen 2, 5 von den Verbindungsstücken 3 bzw. 6 verhältnismässig leicht abgenommen werden.

Zur Beurteilung, ob die Kieferteilmodelle auch eine beim Kauvorgang häufig vorkommende und entsprechend wichtige Bewegung, die aus einer Drehung des Oberkiefers bei gleichzeitiger leichter Anhebung besteht, nicht behindern, kann der zweite Träger 4 aus der Schliesstellung um die Drehachse 14 verdreht werden. Die Gleitfläche 16 wird dabei aus der Nullage, in der die Führungsstifte 17a,b in den höchsten Punkten der Einbuchtungen 18a,b liegen, verdreht und dadurch das Verbindungsteil 6 zusammen mit dem zweiten Träger 4 leicht angehoben. Entsprechend der Form der Einbuchtungen 18a,b erfolgt die Anhebung linear mit der Winkeldifferenz zur Nullage. Sobald jeweils die Enden der Einbuchtungen 18a,b die Führungsstifte 17a,b erreichen, hört die Anhebung auf und der Abstand des zweiten Trägers 4 von der Kippachse 9 ändert sich bei weiterer Drehung des ersteren nicht mehr.

Die beschriebene Verbindung zwischen den Trägern wurde vor allem für Teilartikulatoren entwickelt, doch ist eine Anwendung bei Vollartikulatoren, deren Träger jeweils Modelle des ganzen Kiefers tragen können, ebenfalls möglich.

## Patentansprüche

1. Artikulator mit einem ersten Träger (1) für ein Modell eines Kiefers oder eines Kieferteils und einem zweiten Träger (4) für ein Modell eines gegenüberliegenden Kiefers oder Kieferteils, welche kippbar miteinander verbunden sind, **dadurch gekennzeichnet, dass** die Verbindung zwischen dem ersten Träger (1) und dem zweiten Träger (4) durch ein Gelenkstück (7) hergestellt ist, welches mit dem ersten Träger (1) um eine Kippachse kippbar und mit dem zweiten Träger (4) um eine zur Kippachse mindestens annähernd normale Drehachse (14) drehbar verbunden ist.

2. Artikulator nach Anspruch 1, **dadurch gekennzeichnet**, **dass** der zweite Träger (4) am Gelenkstück (7) derart geführt ist, dass eine Drehung desselben um die Drehachse (14) aus einer Nullage, in welcher der erste Träger (1) und der zweite Träger (4) übereinander liegen, jeweils eine stetige Vergrösserung des Abstandes zwischen dem ersten Träger (1) und dem zweiten Träger (4) nach sich zieht.

3. Artikulator nach Anspruch 2, **dadurch gekennzeichnet, dass** die Vergrösserung des Abstandes zwischen dem ersten Träger (1) und dem zweiten Träger (4) nur in einem begrenzten, die Nullage umgebenden Winkelintervall auftritt.

4. Artikulator nach Anspruch 1 oder 2, **dadurch gekennzeichnet, dass** die Vergrösserung des Abstandes mindestens annähernd linear vom Drehwinkel abhängt.

5. Artikulator nach einem der Ansprüche 2 bis 4, **dadurch gekennzeichnet, dass** die Führung durch mindestens eine Kulisse und mindestens einen mit der Kulisse eingreifenden Taster hergestellt ist.

6. Artikulator nach Anspruch 4 oder 5, **dadurch gekennzeichnet, dass** der zweite Träger (4) die mindestens eine Kulisse trägt, welche eine gegen den ersten Träger (1) weisende Gleitfläche (16) aufweist und das Gelenkstück (7) den mindestens einen Taster, welcher als vom Gelenkstück (7) abstehender Führungsstift (17a, 17b) ausgebildet ist.

7. Artikulator nach Anspruch 6, **dadurch gekennzeichnet, dass** die Gleitfläche (16) der mindestens einen Kulisse die Drehachse (14) auf konstanter Höhe umgibt und lediglich im Bereich der Position des mindestens einen Führungsstiftes (17a, 17b) in der Nullage eine Einbuchtung (18a, 18b) aufweist.

8. Artikulator nach Anspruch 6 oder 7, **dadurch gekennzeichnet, dass** zwischen dem Gelenkstück (7) und dem zweiten Träger (4) ein Federelement wirksam ist, das den mindestens einen Führungsstift (17a, 17b) und die mindestens eine Gleitfläche (16) gegeneinander drückt.

9. Artikulator nach Anspruch 6 oder 7 und Anspruch 8, **dadurch gekennzeichnet, dass** das Federelement als Druckfeder (15) ausgebildet ist, die am Gelenkstück (7) abgestützt ist und den zweiten Träger (4) mit einer gegen den ersten Träger (1) gerichteten Kraft beaufschlagt.

10. Artikulator nach einem der Ansprüche 1 bis 9, **dadurch gekennzeichnet, dass** der Abstand des zweiten Trägers (4) von der Kippachse (9) verstellbar ist.

11. Artikulator nach Anspruch 10, **dadurch gekennzeichnet, dass** das Gelenkstück (7) zwei Teile umfasst, von denen ein erstes Teil mit dem ersten Träger (1) kippbar verbunden ist und ein zweites Teil gegenüber dem ersten Teil in einer zur Kippachse (9) mindestens annähernd normalen Richtung verschiebbar ist.

12. Artikulator nach Anspruch 11, **dadurch gekennzeichnet, dass** das erste Teil oder das zweite Teil als Hülse (8) ausgebildet ist und das zweite Teil bzw. das erste Teil als Dorn (12), welcher in der Hülse (8) verschiebbar gelagert ist.

13. Artikulator nach Anspruch 11 oder 12**, dadurch gekennzeichnet, dass** das zweite Teil gegenüber dem ersten Teil unverdrehbar und bezüglich seiner Verschiebbarkeit fixierbar ist.

14. Artikulator nach den Ansprüche 12 und 13, **dadurch gekennzeichnet, dass** durch die Hülse (8) eine Gewindebohrung geführt ist, in welcher ein Fixierbolzen (19) angeordnet ist, dessen Spitze zwecks Fixierung desselben gegen den Dorn (12) drückt.

15. Artikulator nach Anspruch 14, **dadurch gekennzeichnet, dass** der Dorn (12) eine Längsrille (20) aufweist, in welche die Spitze des Fixierbolzens (19) eingreift.
